# EUROPEAN PATENT APPLICATION

(11) **EP 4 163 880 A1**
(43) Date of publication of application: **12.04.2023**
(21) Application number: 22195055.3
(22) Date of filing: 12.09.2022
(51) Int. Cl.: G06V 20/52, G06N 3/045, G06V 10/82

(54) **LEARNING SYSTEM, IMAGE GENERATION SYSTEM, PRODUCTION SYSTEM, LEARNING METHOD, AND GAN**

(30) Priority: 05.10.2021 JP 2021164164
(71) Applicant: Kabushiki Kaisha Yaskawa Denki, Kitakyushu-shi, Fukuoka 806-0004 (JP)
(72) Inventor: MORI, Makoto, Kitakyushu-shi, Fukuoka, 806-0004 (JP); MASUMURA, Ryo, Kitakyushu-shi, Fukuoka, 806-0004 (JP)
(74) Representative: Viering, Jentschura & Partner mbB Patent- und Rechtsanwälte

(57) **Abstract**

A learning system includes a real environment image acquisition unit, a virtual environment image generation unit, and a GAN learning unit. The real environment image acquisition unit is configured to acquire a real environment image indicating a real environment in which real objects and a real background are provided. The virtual environment image generation unit is configured to generate a virtual environment image indicating a virtual environment in which virtual objects and a virtual background are provided. The virtual environment image includes at least one of the virtual background and the virtual objects which have a different color or different colors different from colors of the real background and the real objects. The GAN learning unit is configured to perform GAN learning via which the virtual environment image is got more similar to the real environment image based on the real environment image and the virtual environment image.

## Description

### BACKGROUND OF THE INVENTION

### Field of the Invention

The present disclosure relates to a learning system, an image generation system, a production system, a learning method, and a GAN.

### Discussion of The Background

In order to control an industrial apparatus such as a robot, a technique using machine learning is known. In order to learn a machine learning model, it is necessary to prepare a large number of training data including a training image which is a real environment image indicating a state of a real environment and control information of an industrial apparatus. For example, in order to reduce the trouble of preparing training data, it is conceivable to use the CycleGAN disclosed in Non-Patent Document, Jun-Yan Zhu, Taesung Park, Phillip Isola, Alexei A. Efros, "Unpaired Image-to-Image Translation using Cycle-Consistent Adversarial Networks", [online], January 24, 2018 [search date: September 3, 2021], Internet <https://arxiv.org/abs/1703.10593>. By using CycleGAN, it is possible to acquire an image in which the virtual environment image VI indicating the state of the virtual environment is close to the real environment image RI, so that a training image close to the real environment can be prepared without much trouble.

### SUMMARY OF THE INVENTION

According to one aspect of the present invention, a learning system includes real environment image acquisition circuitry, virtual environment image generation circuitry, and GAN learning circuitry. The real environment image acquisition circuitry is configured to acquire a real environment image indicating a real environment in which real objects and a real background are provided. The virtual environment image generation circuitry is configured to generate a virtual environment image indicating a virtual environment in which virtual objects and a virtual background are provided. The virtual environment image includes at least one of the virtual background and the virtual objects which have a different color or different colors different from colors of the real background and the real objects. The GAN learning circuitry is configured to perform GAN (Generative Adversarial Networks) learning via which the virtual environment image is got more similar to the real environment image based on the real environment image and the virtual environment image.

According to another aspect of the present invention, a learning method includes acquiring a real environment image indicating a real environment in which real objects and a real background are provided; generating a virtual environment image indicating a virtual environment in which virtual objects and a virtual background are provided, the virtual environment image including at least one of the virtual background and the virtual objects which have a different color or different colors different from colors of the real background and the real objects; and performing GAN (Generative Adversarial Networks) learning via which the virtual environment image is got more similar to the real environment image based on the real environment image and the virtual environment image.

### Effect of the invention

According to the present disclosure, for example, learning of a GAN for bringing a virtual environment image closer to a real environment image can be realized.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings.
FIG. 1 is a diagram showing an example of a hardware configuration of a production system.
FIG. 2 is a diagram showing an example of a real environment in the production system.
FIG. 3 shows an example of a virtual environment generated by a simulator.
FIG. 4 is a diagram showing an example of a case where a virtual object and a virtual background are assimilated.
FIG. 5 is a diagram showing an example of a relationship between the number of times of learning of GAN and loss.
FIG. 6 is a diagram showing an example of processing executed in the first embodiment.
FIG. 7 is a functional block diagram showing an example of a function according to the first embodiment.
FIG. 8 is a flow chart showing an example of processing executed in the production system S.
FIG. 9 is a diagram showing an example of processing executed in the fourth embodiment.
FIG. 10 is an example of a functional block diagram of a fourth embodiment.
FIG. 11 is a functional block diagram of second modified example.

### DESCRIPTION OF THE EMBODIMENTS

### [1. First Embodiment]

A first embodiment which is an example of an embodiment of the production system according to the present disclosure will be described. In the first embodiment, a case where a robot is controlled in the production system will be described as an example.

### [1-1 Hardware Configuration of Production System]

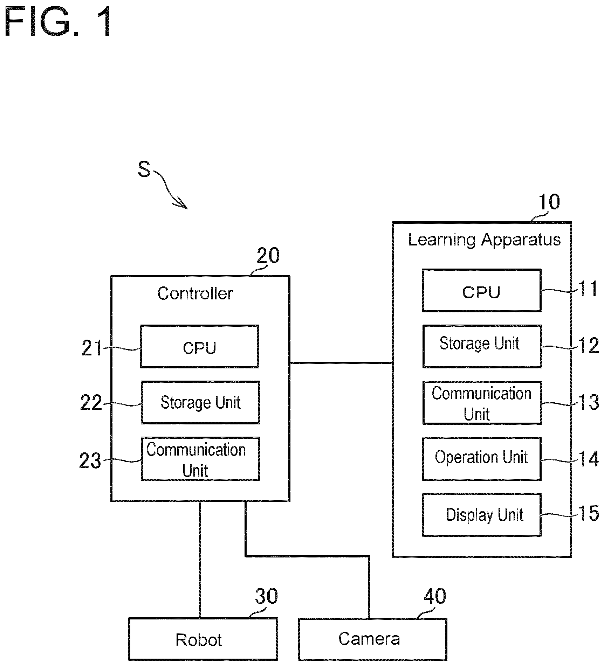

FIG. 1 is a diagram showing an example of the hardware configuration of the production system S. For example, the production system S includes a learning apparatus 10, a controller 20, a robot 30, and a camera 40.

The learning apparatus 10 is an apparatus for performing GAN (Generative Adversarial Networks) learning. GAN is a type of unsupervised learning algorithm. In the first embodiment, CycleGAN will be described as an example of GAN, but other GANs such as SinGAN, DCGAN, or StyleGAN may be used. In the first embodiment, CycleGAN is simply referred to as GAN.

For example, the learning apparatus 10 may be a personal computer, a tablet terminal, a smartphone, or a server computer. The CPU11 includes at least one processor. The storage unit 12 includes at least one of a volatile memory and a non-volatile memory. The communication unit 13 includes at least one of a communication interface for wired communication and a communication interface for wireless communication. The operation unit 14 is an input device such as a mouse or a keyboard. The display unit 15 is a liquid crystal display or an organic EL display.

The controller 20 is a device for controlling the robot 30. The physical structures of the CPU21, the storage unit 22, and the communication unit 23 may be the same as those of the CPU11, the storage unit 12, and the communication unit 13. The CPU 11, 21 are kind of circuitry. The circuitry may be another circuit such as an MPU, an FPGA, or an ASIC. For example, a sensor such as a motor encoder or a torque sensor may be connected to the controller 20 or the robot 30. A camera 40 is connected to the controller 20. In the first embodiment, a case where the camera 40 includes a depth sensor will be described, but the camera 40 may not include a depth sensor.

The program stored in each device may be supplied via an arbitrary network such as an industrial network, a LAN, or the Internet. The hardware configuration of each device is not limited to the above example, and various types of hardware can be applied. For example, a reading unit (e.g., a memory card slot) for reading a computer-readable information storage medium, or an input/output unit (e.g., a USB terminal) for connecting to an external device may be included. In this case, the program stored in the information storage medium may be supplied via the reading unit or the input/output unit.

### [1-2. Outline of First Embodiment]

In the first embodiment, a case where the controller 20 controls the robot 30 that performs bulk picking will be described as an example. The bulk picking is to pick an irregularly arranged real object. The real object is an object to be worked by the robot 30. The real object is sometimes referred to as a workpiece. In the first embodiment, a case where the real object is a component is described as an example, but the real object may be any object such as a product, a box in which the product is packaged, or a material. As the picking method itself, various methods such as holding or adsorption can be used.

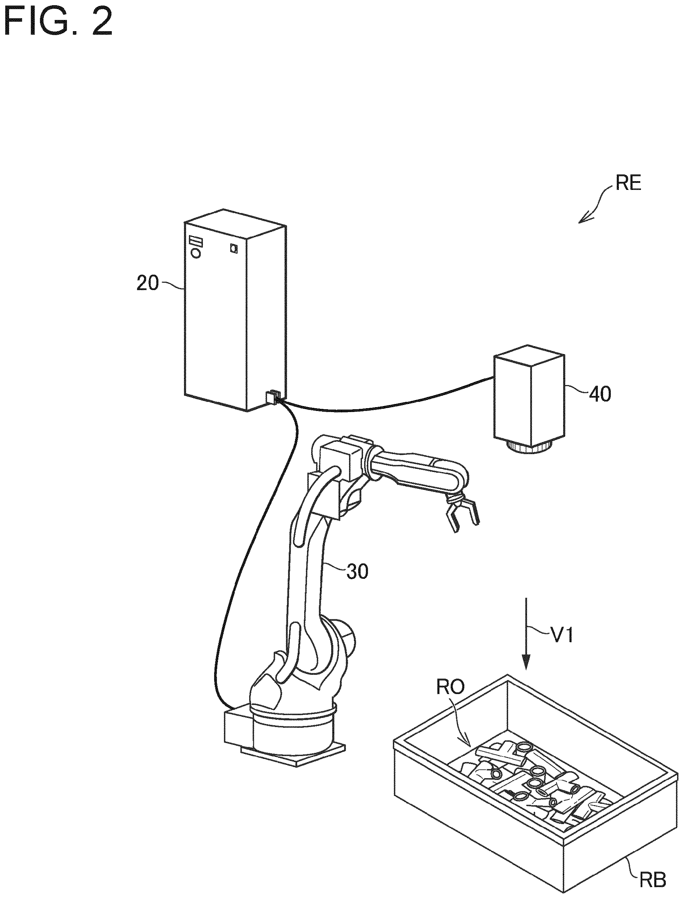

FIG. 2 is a diagram showing an example of a real environment in the production system S. The real environment RE is an environment in which work is performed on the real object RO. For example, the real environment RE is a space in a facility such as a factory. In the example of FIG. 2, a box on which a real object RO is placed is arranged in a real environment RE. Since this box corresponds to the background in the photographed image generated by the camera 40, the box is hereinafter referred to as the real background RB. Although the learning apparatus 10 is not shown in FIG. 2, the learning apparatus 10 can be connected to the controller 20 by a communication cable or the like.

In the first embodiment, the case where the position and direction of the camera 40 are fixed will be described, but at least one of the position and direction of the camera 40 may be changed. For example, the camera 40 is disposed above the working range of the robot 30 so as to face directly below. The position and orientation of the camera 40 may be any position and orientation and is not limited to the example of the first embodiment. For example, the camera 40 may be positioned and oriented so as to look down on the real object RO and the real background RB from obliquely upward to obliquely downward. Alternatively, for example, the robot 30 or another robot may hold the camera 40.

The real object RO and the real background RB are arranged so as to fall within the photographing range of the camera 40. The camera 40 continuously captures images at a predetermined frame rate and continuously transmits the captured images to the controller 20. Hereinafter, a captured image generated for controlling the robot 30 is referred to as a current image. The controller 20 inputs the current image received from the camera 40 to the picking control model and acquires picking information of the real object RO.

The picking control model is a model using machine learning. In the first embodiment, a case where a supervised learning model is used will be described, but a semi-supervised learning model or an unsupervised learning model may be used. Various models can be used as the picking control model, and for example, a CNN, an R-CNN, or a mask R-CNN may be used. When a current image is inputted, the picking control model executes processing such as convolution and outputs picking information.

The picking information includes a target position of the robot 30. The target position is a position to which the robot 30 moves. In addition to the target position, the picking information may include other information such as the direction of the hand of the robot 30 and the gripping force. The controller 20 controls the robot 30 based on the picking information output from the picking control model.

In the picking control model, training data which is a pair of an image for training and picking information to be correct is learned. The image for training shows the state of bulk loading assumed in a real environment RE. In order to improve the accuracy of bulk loading picking, it is necessary to assume various bulk loading conditions, so it is necessary to prepare a large number of training data, which is very time-consuming. Therefore, in the first embodiment, by using a simulator, the trouble of preparing training data is reduced. The simulator is a program for generating a virtual environment imitating the real environment RE.

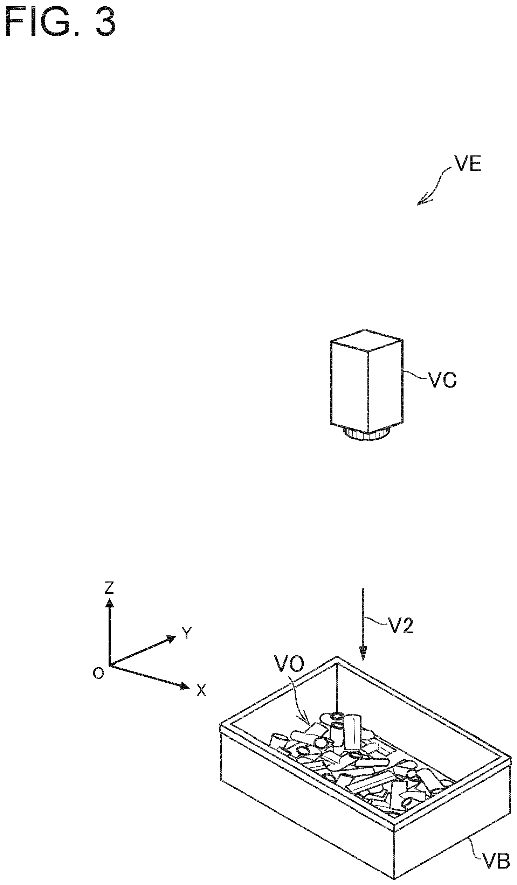

FIG. 3 shows an example of a virtual environment generated by the simulator. In the first embodiment, a case where the virtual environment VE is three-dimensional will be described, but the virtual environment VE may be two-dimensional. In the virtual environment VE, three-dimensional coordinate axes (X-axis, Y-axis, and Z-axis in FIG. 3) are set. For example, the origin O of these coordinate axes may be set to correspond to the position of the robot 30. A position in the virtual environment VE is specified by three-dimensional coordinates. In the virtual environment VE, a virtual background VB and a virtual object VO are arranged.

The virtual background VB is a three-dimensional object imitating a box which is the real background RB. For example, the virtual background VB is created based on three-dimensional scan data or CAD data of the box. Alternatively, the virtual background VB may be created based on parameters specified by the user, such as reproducing a box by specifying the length of three sides or reproducing a spherical object by specifying the length of a diameter. In the first embodiment, the case where the shape and size of the box and the shape and size of the virtual background VB are the same will be described, but at least one of these shapes and sizes may be slightly different. When at least one of these shapes and sizes is different from each other, the difference in at least one of the shapes and sizes falls within a predetermined range.

The virtual object VO is a three-dimensional object imitating the real object RO. For example, the virtual object VO is created based on three-dimensional scan data or CAD data of the real object RO. In the first embodiment, a case where the shape and size of the real object RO and the shape and size of the virtual object VO are the same will be described, but they may be slightly different. When at least one of these shapes and sizes is different from each other, the difference in at least one of the shapes and sizes falls within a predetermined range.

A virtual camera VC is set in the virtual environment VE. In the first embodiment, a case where the positional relationship between the origin O of the coordinate axis, the virtual camera VC, and the virtual background VB is the same as the positional relationship between the robot 30, the camera 40, and the real background RB will be described, but these positional relationships may be slightly different. In the case where these positional relationships are different from each other, it is assumed that the difference in positional relationships falls within a predetermined range.

The direction of the virtual camera VC is set to be the same as that of the camera 40. In the first embodiment, since the photographing direction V1 of the camera 40 is downward, the photographing direction V2 of the virtual camera VC is also downward (the negative direction of the Z axis). The virtual background VB and the virtual object VO are arranged in the photographing direction V2 of the virtual camera VC. An arbitrary number of virtual objects VO are arranged in the virtual background VB. For example, the number, position and orientation of the virtual objects VO may be determined randomly or may be specified by the user. It should be noted that the photographing direction V1 and the photographing direction V2 may be slightly different.

In order to increase the accuracy of the picking control model, it is necessary to let the picking control model learn an image for training which is as close to the real environment RE as possible. For this reason, it is conceivable to generate a virtual environment image showing a state within a photographing range of the virtual camera VC after making the virtual object VO a color close to the real object RO and making the virtual background VB a color close to the real background RB. Alternatively, for example, a portion of the virtual background VB in the virtual environment image may be replaced with a portion of the real background RB in the image taken by the camera 40.

However, since there is a limit to the accuracy of the real environment RE that can be reproduced by the simulator, the learning apparatus 10 uses the GAN to make the virtual environment image close to the real environment RE. The GAN uses images taken by the camera 40. Hereinafter, this captured image will be referred to as a real environment image. An image output from the GAN is referred to as a pseudo environment image. The GAN outputs a pseudo environment image in which the virtual environment image is close to the real environment image.

In this regard, when the color of the real object RO is significantly different from the color of the real background RB, since the real object RO and the real background RB can be clearly distinguished from each other, the pseudo-environment image output from the GAN has a high reproducibility of the real environment RE. On the other hand, if the color of the real object RO is similar to the color of the real background RB, it is difficult to distinguish between the real object RO and the real background RB. A similar assimilation may occur when a grayscale image is used instead of a color image.

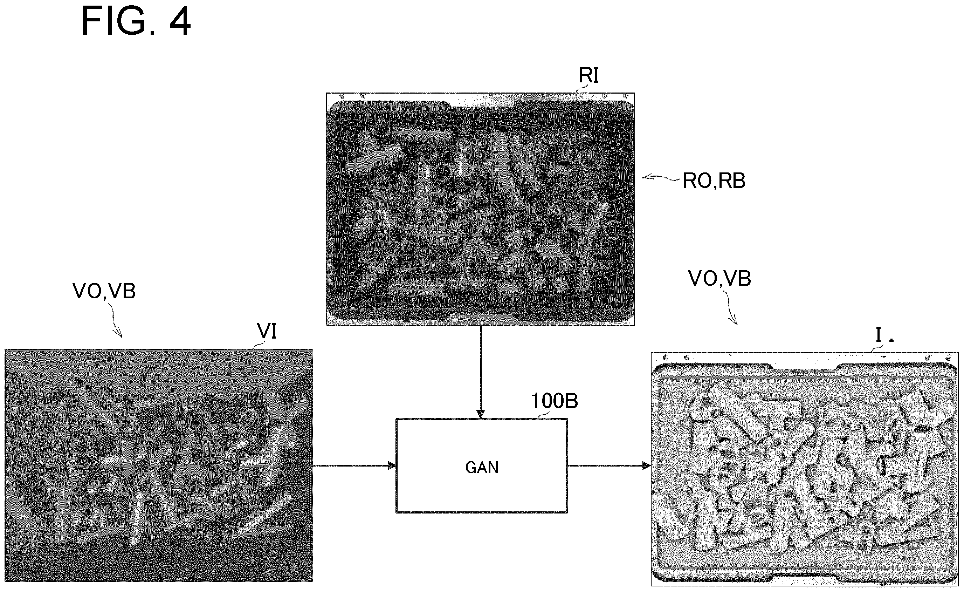

FIG. 4 is a diagram showing an example of a case where the virtual object VO and the virtual background VB are assimilated. In FIG. 4, each image is shown in gray scale for the convenience of the application, but each image may be in color. As in the real environment image in FIG. 4, if the color of the real object RO is similar to the color of the real background RB, the virtual object VO and the virtual background VB in the pseudo environment image II may be assimilated. One of the reasons why these colors are assimilated is considered to be related to a loss (learning error) in the case where the GAN100B is learned based on the real environment image RI and the virtual environment image VI.

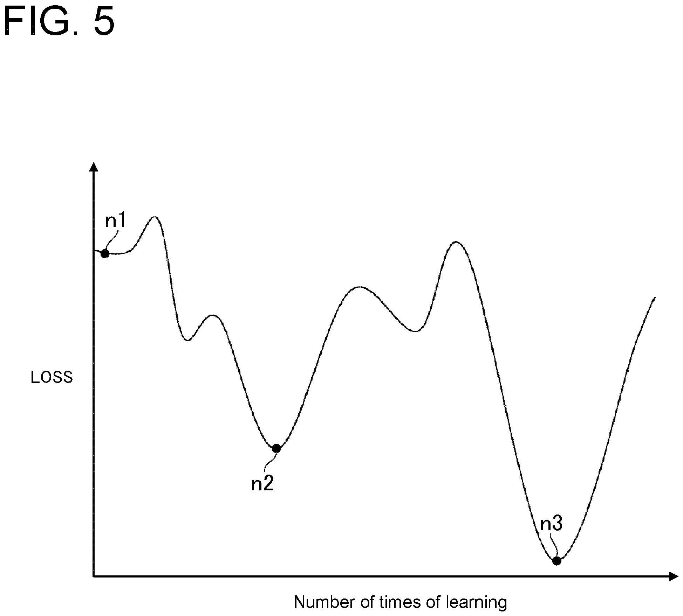

FIG. 5 is a diagram showing an example of the relationship between the number of times of learning and loss of the GAN100B. There are two types of GAN100B, a generator and a discriminator. As in this embodiment, when the GAN100B is CycleGAN, there are two sets of generators and classifiers. The generator and discriminator of the GAN100B are learned alternately. If the learning is successful, the loss of each of the generator and discriminator does not decrease, but rather competes with each other. This is because the generator learns to reduce the loss as it successfully fools the discriminator, and the discriminator learns to reduce the loss as it successfully detects the authenticity of the image generated by the generator. Therefore, simply lowering the loss does not necessarily mean a good state. However, when the GAN100B is sufficiently learned, it can be considered that the lower the loss is, the higher the quality of the image is generated for the identifier whose weight is fixed.

In the learning phase of the generator, it is considered that whether the virtual object VO of the virtual environment image VI approaches the real background RB (virtual background VB) or the virtual object VO approaches the real object RO is determined depending on whether the identification device can be deceived by bringing the virtual object VO closer to the real background RB (virtual background VB) (that is, whether the loss is reduced) or whether the identification device can be deceived by bringing the virtual object VO of the virtual environment image VI closer to the real object RO (that is, whether the loss is reduced).

For example, when the virtual object VO in the virtual environment image VI is close to the real background RB (for example, when the color of the real background RB, the color of the virtual object VO, and the color of the real object RO are arranged in this order in the virtual environment image VI), the classifier can be successfully fooled from the beginning of the learning phase, and the loss may be relatively small. In this case, the update amount of the weight of the GAN100B becomes small, and it becomes easy to fall into a local solution (that is, bringing the color of the virtual object VO close to the color of the real background RB). On the other hand, when the color of the real background RB is significantly different from the color of the virtual object VO (for example, when the color of the real background RB, the color of the real object RO, and the color of the virtual object VO are arranged in this order in the virtual environment image VI), the discriminator cannot be successfully fooled at the beginning of the learning phase, and the loss may become relatively large. In this case, since the update amount of the weight of the GAN100B becomes large, it is considered that it becomes easy to cross the valley at the beginning of the learning phase.

As shown in FIG. 5, learning of the GAN100B is repeatedly executed based on the real environment image RI and the virtual environment image VI, thereby changing the loss. At the time point of the learning number n1 at the beginning, the loss is still large, so that the virtual object VO does not approach the color of the real object RO. As the loss becomes smaller, the color of the virtual object VO approaches that of the real object RO.

For example, at the time point of the learning number n2, the virtual object VO may fall into the above-described local solution, and the virtual object VO may be intermediate in color between the real object RO and the real background RB. In this state, the virtual object VO and the virtual background VB may be assimilated as shown in FIG. 4. At the time point of the learning number n3, the color of the virtual object VO is considerably close to the color of the real object RO because the color of the virtual object VO exceeds the valley portion of the learning number n2. In this state, the virtual object VO and the virtual background VB can be distinguished from each other, and the pseudo environment image II is close to the real environment RE.

As described above, if the virtual object VO cannot cross the valley at the beginning of the learning phase, the color of the virtual object VO may not be the color of the real object RO, but may be a middle color between the real object RO and the real background RB or a color close to the real background RB. In the example of FIG. 5, if it is not possible to exceed the valley in the loss curve such as the learning number n2, there is a case where the virtual object VO and the virtual background VB are assimilated as in the pseudo environment image II of FIG. 4. On the other hand, if it is possible to go over the valley in the loss curve, it is considered that assimilation of the virtual object VO and the virtual background VB can be prevented.

In this regard, in order to overcome the valley in the loss curve, if a virtual environment image VI in which the loss becomes large is generated at the beginning of learning (inertia is given so that the learning number n1 in FIG. 5 is dropped from a higher position) and it is prevented from falling into the loss valley at the beginning of learning, the loss change before entering the valley in the loss curve becomes large. If the change in loss before entering the valley is large, the learning does not settle in the vicinity of the valley (it is considered that the GAN100B can sufficiently reproduce the real environment RE), so that the valley can be overcome. For example, such learning can be realized by an optimizer having a momentum term (for example, a technique called Adam that incorporates the nature of completion). On the other hand, if the amount of learning at the beginning of learning is small, the slope of the loss curve becomes gentle, and the learning becomes calm at the loss near the valley, and there is a possibility that the student cannot cross the valley of the loss curve. Therefore, in the first embodiment, the color of the virtual object VO is intentionally made to be significantly different from that of the real object RO so that the amount of learning is increased particularly at the beginning of learning.

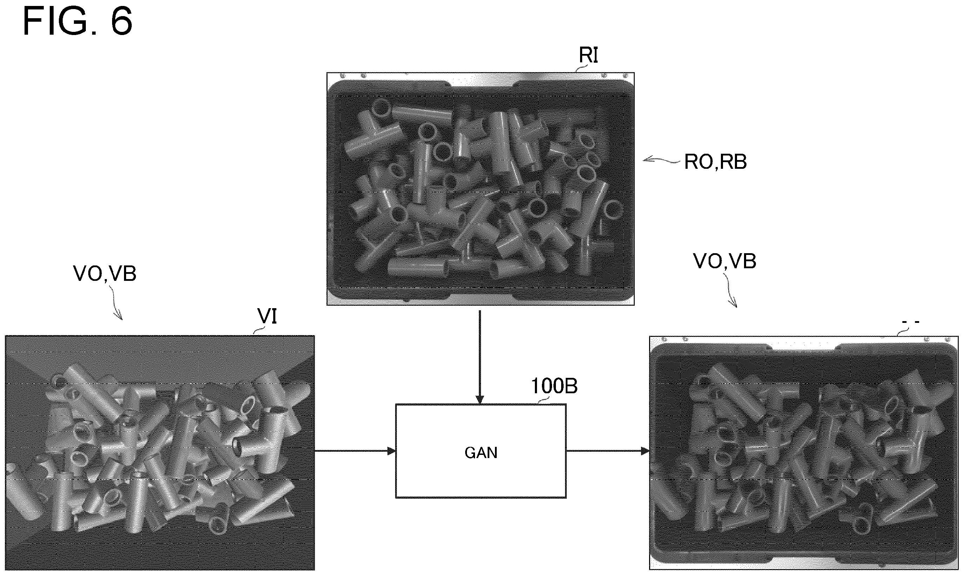

FIG. 6 is a diagram showing an example of processing executed in the first embodiment. As shown in the virtual environment image VI of FIG. 6, in the first embodiment, the color of the virtual object VO is significantly different from the color of the real object RO. As a result, the color of the virtual object VO is significantly different from the color of the virtual background VB. For example, if the real object RO and the real background RB are gray, the virtual object VO is yellow and the virtual background VB is gray. This allows them to cross the valley in the loss curve at the beginning of learning. Therefore, it is possible to realize learning of the GAN100B such that the virtual environment image VI is brought close to the real environment image RI. Hereinafter, details of the first embodiment will be described.

### [1-3. Functions in First Embodiment]

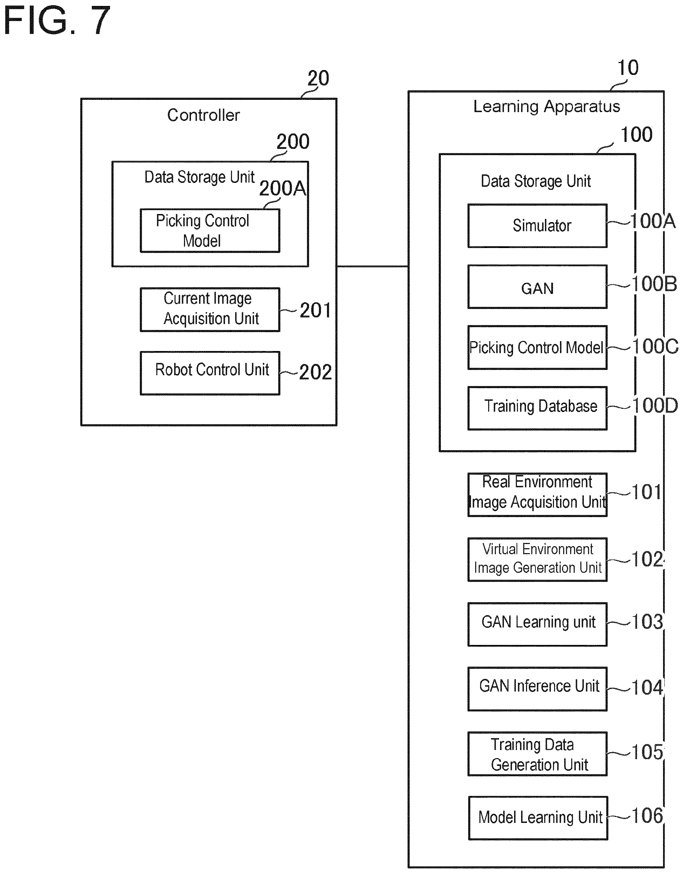

FIG. 7 is a functional block diagram showing an example of a function in the first embodiment.

### [1-3-1. Function of Learning Apparatus]

The data storage unit 100 is realized mainly by the storage unit 12. The real environment image acquisition unit (an example of "real environment image acquisition circuitry") 101, the virtual environment image generation unit (an example of "virtual environment image generation circuitry") 102, the GAN learning unit (an example of "GAN learning circuitry") 103, the GAN inference unit (an example of "GAN inference circuitry") 104, the training data generation unit 105, and the model learning unit (an example of "model learning circuitry") 106 are realized mainly by the CPU11.

### [Data Storage Unit]

The data storage unit 100 includes the simulator 100A. For example, the simulator 100A generates a virtual environment VE in which the position of the virtual object VO is different from that of the real object RO in a three-dimensional space including a virtual object VO of a color corresponding to the real object RO and a virtual background VB of a color corresponding to the real background RB. This virtual environment VE becomes the virtual environment VE shown in the virtual environment image VI of FIG. 4.

The color corresponding to the real object RO is the same color as the real object RO or a color similar to the real object RO. The color similarity means that the difference between the numerical values of the colors is less than a threshold value. When colors are expressed in a vector form, the distance in the vector space is less than a threshold value, which means that colors are similar. For example, being a similar color corresponds to resembling in colors. The color corresponding to the real background RB is the same color as the real background RB or a color similar to the real background RB.

The real background RB is an object other than the real object RO among objects shown in the real environment image RI. For example, the real background RB is an object that is farther from the camera than the real object RO among objects in the photographing range of the camera 40. The real background RB may be an object other than a box. For example, when the real object RO is disposed on a container other than a box, a sheet, a belt conveyor, or a desk, the container other than the box, a sheet, a belt conveyor, or a desk corresponds to the real background RB. Further, a combination of a plurality of objects may correspond to the real background RB.

The virtual background VB is an object other than the virtual object VO among the virtual objects shown in the virtual environment image VI. In the first embodiment, a three-dimensional object corresponds to a virtual object, but if the virtual environment VE is two-dimensional, a planar image corresponds to a virtual object. For example, the virtual background VB is an object that is farther from the virtual camera VC than the virtual object VO among the virtual objects in the photographing range of the virtual camera VC. The virtual background VB may be an object other than a box. For example, when the virtual object VO is arranged on a virtual object imitating a container other than a box, a sheet, a belt conveyor, or a desk, the virtual object imitating a container other than a box, a sheet, a belt conveyor, or a desk corresponds to the virtual background VB.

For example, the data storage unit 100 stores color information relating to each color of the virtual object VO and the virtual background VB. In the color information, not only a color but also a pattern may be shown as necessary. For example, the color information may be a texture. The virtual object VO and the virtual background VB may be a single color or may be a plurality of colors. The colors of the virtual object VO and the virtual background VB may be specified by the user or acquired from the real environment image RI. Each color of the virtual object VO and the virtual background VB may be a default color predetermined in the simulator 100A.

The data storage unit 100 stores the GAN100B before learning. The data storage unit 100 stores data such as parameters and programs included in the GAN100B. The GAN100B stored in the data storage unit 100 is learned by the GAN learning unit 103. When learning is performed by the GAN learning unit 103, the data storage unit 100 stores the learned GAN100B.

The data storage unit 100 stores the picking control model 100C before learning. The data storage unit 100 stores data such as parameters and programs included in the picking control model 100C. The picking control model 100C stored in the data storage unit 100 is learned by the model learning unit 106. When learning is performed by the model learning unit 106, the data storage unit 100 stores the learned picking control model 100C.

The data storage unit 100 stores the training database 100D. A plurality of training data is stored in the training database 100D. The individual training data is as described above. The training data is generated by the training data generation unit 105. The data storage unit 100 can store other arbitrary data such as data of the virtual object VO and the virtual background VB, and an engineering tool for setting the controller 20.

### [Real Environment Image Acquisition Unit]

The real environment image acquisition unit 101 acquires a real environment image RI indicating a real environment RE in which a plurality of real objects RO are arranged. In the first embodiment, a case where the real environment image RI is generated by the camera 40 will be described, but the real environment image RI may be generated by another camera. The real environment image acquisition unit 101 may directly acquire the real environment image RI from the camera 40, or may acquire the real environment image RI recorded in the controller 20, another device, or an information storage medium.

### [Virtual Environment Image Generation Unit]

A virtual environment image generation unit 102 shows a state of a virtual environment VE in which a plurality of virtual objects VO are arranged, and generates a virtual environment image VI including at least one of a virtual object VO and a virtual background VB having a color different from the color of the real object RO and the color of the real background RB. Different colors mean that the colors are not the same or that the colors are unlike.

In the first embodiment, a case where the color of the real object RO and the color of the real background RB are different from the color of the virtual object VO and the color of the real background RB is similar to the color of the virtual background VB is described as an example. Therefore, the virtual environment image generation unit 102 generates a virtual environment image VI including a virtual object VO and a virtual background VB of mutually different colors. It can also be said that the virtual environment image generation unit 102 generates a virtual environment image VI including a virtual object VO having a color different from the color of the real object RO and the color of the real background RB. Since the color of the real background RB is similar to the color of the virtual background VB, as a result, the color of the real object RO is similar to the color of the virtual background VB.

A color may be set in advance for the virtual object VO, or the virtual environment image generation unit 102 may set a color for the virtual object VO. For example, the virtual environment image generation unit 102 may set the color of the virtual object VO to which the color is not set based on the color information stored in the data storage unit 100. When the color information indicates a texture, the texture may be set on the surface of the virtual object VO by texture mapping. When the color corresponding to the real object RO is set to the virtual object VO by default, the virtual environment image generation unit 102 may change the color set in the virtual object VO. Similarly, the color of the virtual background VB may be preset in the virtual background VB, or the virtual environment image generation unit 102 may set the color of the virtual background VB.

For example, assuming that the real object RO and the real background RB are achromatic, the virtual environment image generation unit 102 may generate a virtual environment image VI including a chromatic virtual object VO and an achromatic virtual background VB. Assuming that the real object RO and the real background RB are in the gray color system, the virtual environment image generation unit 102 generates a virtual environment image VI including a yellow virtual object VO far from the gray color system and a virtual background VB in the gray color system.

Conversely, assuming that the real object RO and the real background RB are chromatic colors, the virtual environment image generation unit 102 may generate a virtual environment image VI including an achromatic virtual object VO and a chromatic virtual background VB. For example, assuming that the real object RO and the real background RB are in the green color system, the virtual environment image generation unit 102 generates a virtual environment image VI including the virtual object VO in gray color, which is far from the green color system, and the virtual background VB in the green color system.

Note that the color of the virtual object VO is not limited to the above example, and may be any color that can be sufficiently distinguished from the virtual background VB. The color similarity may be determined according to a similar color defined by a known color palette tool or the like. For example, the virtual environment image generation unit 102 may generate the virtual environment image VI so that the real object RO and the real background RB have opposite colors to each other. An anti-color may also be referred to as a complementary, complementary, or object color.

In the first embodiment, since the simulator 100A generates the virtual environment VE, when generating the virtual environment image VI from the virtual environment VE generated by the simulator 100A, the virtual environment image generation unit 102 generates the virtual environment image VI including at least one of the virtual object VO and the virtual background VB of different colors. The processing of the virtual environment image generation unit 102 may be executed as part of the processing of the simulator 100A. The virtual environment image generation unit 102 executes a predetermined coordinate transformation process to generate a virtual environment image VI indicating a state within a photographing range of the virtual camera VC among the virtual environments VE generated by the simulator 100A.

The virtual environment image generation unit 102 generates a virtual environment image VI for learning of the GAN100B and a virtual environment image VI for generating training data (for inference of the GAN100B). The virtual environment image VI for learning and the virtual environment image VI for generating training data differ in at least one of the number, position, and attitude of virtual objects VO in the virtual environment VE. For example, the simulator makes the virtual environment image VI for learning different from the virtual environment image VI for generating training data by randomly determining at least one of the number, position, and attitude of the virtual objects VO. A user may specify at least one of the number, position, and attitude of virtual objects VO. The virtual environment image generation unit 102 may generate at least one virtual environment image VI for learning of the GAN100B and at least one virtual environment image VI for generating training data, and the number of images may be arbitrary. For example, several tens to several thousands of virtual environment images VI for generating training data may be generated.

### [GAN Learning Unit]

Based on the real environment image RI acquired by the real environment image acquisition unit 101 and the virtual environment image VI generated by the virtual environment image generation unit 102, the GAN learning unit 103 performs learning of the GAN100B for bringing the virtual environment image VI closer to the real environment image RI. In the first embodiment, the GAN learning unit 103 performs learning of the GAN100B so that the virtual environment image VI becomes the GAN100B close to the real environment image RI.

The learning of the GAN100B itself may be performed by using a known unsupervised learning method. For example, when the GAN100B is CycleGAN, as described above, the GAN learning unit 103 includes two sets of generators and classifiers, and learns the GAN100B by alternately learning the generators and classifiers. The GAN learning unit 103 may repeat the learning by a predetermined number of times, or may terminate the learning when the user visually recognizes the virtual environment image VI output from the GAN100B and the accuracy becomes sufficient. Alternatively, for example, a score called Inception Score or FID may be used to determine the end of learning.

### [GAN Inference Unit]

The GAN inference unit 104 uses the GAN100B learned by the GAN learning unit 103 to generate a pseudo environment image II in which a virtual environment image VI different from the virtual environment image VI used for learning is brought close to the real environment image RI. The virtual environment image VI used for learning is the above-described virtual environment image VI for learning. A virtual environment image VI different from this virtual environment image VI is the virtual environment image VI for generating the training data described above.

The GAN inference unit 104 inputs the virtual environment image VI to the GAN100B to generate a pseudo environment image II, and acquires the pseudo environment image II output from the GAN100B. For example, assuming that the virtual environment image generation unit 102 generates n (n is a natural number) virtual environment images VI for generating training data, the GAN inference unit 104 inputs each of the n virtual environment images VI to the GAN100B and generates n pseudo environment images II.

### [Training Data Generation Unit]

The training data generation unit 105 generates training data to be learned by the picking control model 100C based on the pseudo environment image II generated by the GAN inference unit 104. The training data generation unit 105 may acquire the pseudo environment image II generated by the GAN inference unit 104 as it is as a training image, or may acquire the pseudo environment image II subjected to image processing such as gradation processing as a training image. The training data generation unit 105 acquires picking information corresponding to the pseudo environment image II, generates a pair of the pseudo environment image II and the picking information as training data, and stores it in the training database 100D.

For example, the training data generation unit 105 acquires picking information by analyzing the state of the virtual environment VE. This analysis method itself may be an arbitrary method. For example, the training data generation unit 105 acquires three-dimensional coordinates indicating the position of the virtual object VO in the virtual environment VE. This location may be on the surface, inside, or around the virtual object VO. This position may be a position determined based on the center of gravity of the virtual object VO. The three-dimensional coordinates of the picking information may be coordinates in the coordinate axis of the virtual environment VE or coordinates with the virtual camera VC as a reference. The picking information may not be acquired by the analytical method described above, but may be designated by the user.

The picking information may include an upper position of a picking position or the like with respect to each of the plurality of real objects RO. That is, picking information including picking positions and the like for successively picking a plurality of real objects RO may be associated with one pseudo environment image II. In this case, it is assumed that the picking position and the like are shown in time series in the picking information. Also in this case, individual picking positions and the like may be acquired by analyzing the virtual environment VE generated by the simulator 100A, or may be designated by the user.

### [Model Learning Unit]

A model learning unit 106 performs learning of a picking control model 100C for controlling picking by a robot based on training data including a pseudo environment image II generated by a GAN inference unit 104 and picking information of the robot. For the learning itself, a known learning method used in supervised learning may be used. For example, the model learning unit 106 performs learning of the picking control model 100C so that picking information corresponding to the pseudo environment image II is output when the pseudo environment image II is environment image II is output when the pseudo environment image II is input. The model learning unit 106 records the learned picking control model 100C in the data storage unit 100. This picking control model 100C is also recorded in the data storage unit 200 of the controller 20.

### [1-3-2 Functions of Controller]

The data storage unit 200 is realized mainly by the storage unit 22. The current image acquisition unit (an example of "current image acquisition circuitry") 201 and the robot control unit (an example of "robot control circuitry") 202 are implemented mainly by the CPU21.

### [Data Storage Unit]

The data storage unit 200 stores data necessary for controlling the robot 30. For example, the data storage unit 200 stores the learned picking control model 200A. This picking control model 200A is the same as the learned picking control model 100C stored in the data storage unit 100 of the learning apparatus 10. The data storage unit 200 stores a program in which an operation procedure of the robot 30 is defined and parameters used for controlling the robot 30.

### [Current Image Acquisition Unit]

The current image acquisition unit 201 acquires a current image indicating the current state of the real environment RE when controlling picking by the robot 30. The current image acquisition unit 201 acquires a current image from the camera 40. In the first embodiment, the real environment image RI is also acquired from the camera 40, but the difference is that the real environment image RI is used for learning by the GAN100B while the current image is used for controlling the robot 30. Although a case where the current image acquisition unit 201 directly acquires the current image from the camera 40 will be described, the current image acquisition unit 201 may acquire the current image via another apparatus.

### [Robot Control Unit]

The robot control unit 202 controls the robot 30 based on the current image and the picking control model 200A. The robot control unit 202 inputs the current image to the picking control model 200A and acquires the picking information output from the picking control model 200A. For example, the robot control unit 202 controls the robot 30 so that the robot 30 moves to the target position indicated by the acquired picking information.

As a method itself for moving the robot 30 to a predetermined target position, a known method can be used. For example, the robot control unit 202 calculates a path from the current position of the robot 30 to the picking information, and controls the robot 30 to move on the calculated path. When the direction and holding force of the hand of the robot 30 are indicated in the picking information, the robot control unit 202 controls the robot 30 based on the direction and holding force. When the picking information includes an area above a picking position or the like with respect to each of the plurality of real objects RO, the robot control unit 202 controls the robot 30 so as to continuously pick the plurality of real objects RO one after another based on the picking information.

### [1-4. Processing Executed in Production System]

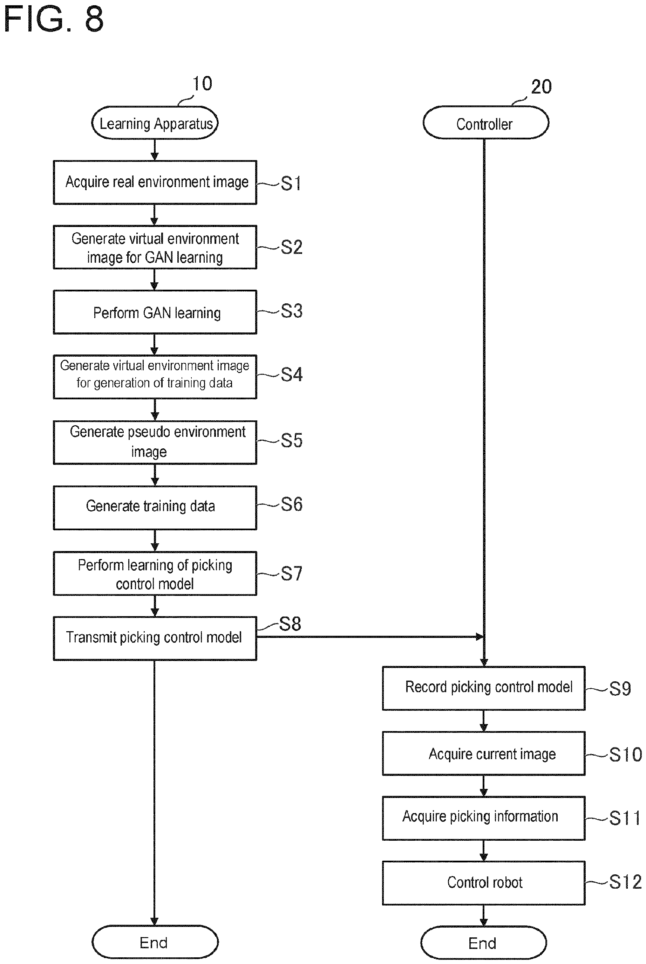

FIG. 8 is a flow chart showing an example of processing executed in the production system S. The processing shown in FIG. 8 is executed by the CPU 11, 21 operating on the basis of programs stored in the storage unit 12, 22. As shown in FIG. 8, the learning apparatus 10 acquires a real environment image RI generated by the camera 40 (S1). The learning apparatus 10 activates the simulator 100A to generate a virtual environment image VI for learning of the GAN100B (S2). In S2, the learning apparatus 10 generates a virtual environment VE by the simulator 100A, and generates a virtual environment image VI including a virtual object VO of a color different from the real object RO, the real background RB, and the virtual background VB, and a virtual background VB of a color corresponding to the real background RB.

The learning apparatus 10 performs learning of the GAN100B based on the real environment image RI acquired in S1 and the virtual environment image VI acquired in S2 (S3). The learning apparatus 10 generates a virtual environment image VI for generation of training data (S4). In S4, the learning apparatus 10 makes at least one of the number, position, and direction of the virtual objects VO different from that when the virtual environment image VI is generated in S2. The learning apparatus 10 inputs the virtual environment image VI generated in S4 to the GAN100B and generates a pseudo environment image II (S5). When a plurality of virtual environment images VI is generated in S4, a pseudo environment image II is generated for each virtual environment image VI in S5.

The learning apparatus 10 generates training data based on the pseudo environment image II and picking information corresponding to the position of the virtual object VO in the virtual environment VE, and stores the training data in the training database 100D (S6). When a plurality of pseudo environment images II is generated in S5, training data is generated for each pseudo environment image II in S6. The learning apparatus 10 performs learning of the picking control model 100C based on the training data stored in the training database 100D (S7). The learning apparatus 10 transmits the learned picking control model 100C to the controller 20 (S8).

The controller 20 records the picking control model 100C received from the learning apparatus 10 as the picking control model 200A (S9). The controller 20 acquires a current image from the camera 40 (S10). The controller 20 acquires picking information based on the current image acquired in S10 and the picking control model 200A (S11). The controller 20 controls the robot 30 based on the picking information acquired in S11 (S12), and this process ends. Thereafter, the processing of S10 to S12 is repeated until there is no real object RO.

According to the production system S of the first embodiment, learning of a GAN100 B is performed based on a virtual environment image VI including at least one of a virtual object VO and a virtual background VB having a color different from the color of a real object RO and the color of a real background RB. As a result, it is possible to prevent the virtual object VO from becoming the GAN100B that approaches the color of the virtual background VB, and to obtain the GAN100B in which the virtual environment image VI approaches the real environment image RI. For example, if the colors of the real object RO and the real background RB in the real environment image RI are similar to each other and the colors of the virtual object VO and the virtual background VB in the virtual environment image VI are similar to each other, a loss to a certain extent may occur. In this case, if the color of the virtual object VO resembles the color of the real background RB, the GAN100B recognizes that the virtual environment image VI approaches the real environment image RI, and there is a possibility that an image in which the virtual object VO in the virtual environment image VI is assimilated with the color of the virtual background VB is output. In this regard, in the virtual environment image VI according to the first embodiment, the difference in color between the virtual object VO and the virtual background VB is large, and the amount of learning by the GAN100B increases, so that it is possible to prevent a loss to a certain degree and to prevent the above color assimilation. That is, it is possible to obtain the GAN100B in which the virtual object VO of the virtual environment image VI approaches the real object RO rather than the real background RB. Such a GAN100B can generate a pseudo environment image II close to the real environment image RI. When a gray-scale image is used instead of a color image, assimilation with the background color may occur, but in the case of the first embodiment, it is possible to obtain a GAN100B which does not coincide with the background color.

In addition, when the virtual object VO and the virtual background VB have the same or similar colors, the production system S becomes a GAN100B that generates a virtual environment image VI in which the virtual object VO is assimilated with the virtual background VB, but by generating a virtual environment image VI that includes the virtual object VO and the virtual background VB of mutually different colors, it is possible to obtain the GAN100B that brings the virtual environment image VI closer to the real environment image RI.

In addition, the production system S generates a virtual environment image VI including a virtual object VO of a color different from that of the real object RO and that of the real background RB, thereby preventing the virtual object VO from being assimilated with the virtual background VB and making the virtual environment image VI close to the real environment image RI.

In addition, the production system S can perform simulation in the same situation as the real environment RE by a simulator 100A which generates a virtual environment VE in which the position of the virtual object VO differs from that of the real object RO in a three-dimensional space including a virtual object VO of a color corresponding to the real object RO and a virtual background VB of a color corresponding to the real background RB. Therefore, the convenience of the user is enhanced. For example, by displaying the state of the virtual environment VE on the display unit 15, the user can confirm the state of the virtual environment VE.

In addition, the production system S generates a pseudo environment image II in which a virtual environment image VI different from the virtual environment image VI used for learning is brought close to the real environment image RI by the GAN100B learned by the GAN learning unit 103. Thus, the training data can be efficiently generated. By preparing a large number of training data, the precision of the picking control models 100C and 200A is also enhanced.

In addition, the production system S controls the robot 30 based on the current image and the learned picking control model 200A, thereby increasing the precision of picking.

### [2. Second Embodiment]

In the first embodiment, the case where the virtual environment image VI including the virtual object VO of a color different from the real object RO and the virtual background VB corresponding to the real background RB is generated has been described. In the second embodiment, a case will be described in which a virtual environment image VI including a virtual object VO of a color corresponding to the real object RO and a virtual background VB of a color far from the real background RB is generated. In the second to fifth embodiments described below, description of the same points as those of the first embodiment is omitted.

In the second embodiment, the virtual environment image generation unit 102 generates a virtual background VB having a color different from the color of the real object RO and the color of the real background RB. The color may be set in the virtual background VB in advance, or the virtual environment image generation unit 102 may set the color in the virtual background VB. For example, the virtual environment image generation unit 102 may set the color of the virtual background VB to which the color is not set based on the color information stored in the data storage unit 100. When the color corresponding to the real background RB is set in the virtual background VB by default, the virtual environment image generation unit 102 may change the color set in the virtual background VB. When the color information indicates a texture, the texture may be set on the surface of the virtual background VB by texture mapping. Similarly, the color of the virtual object VO may be set in advance, or the virtual environment image generation unit 102 may set the color of the virtual object VO.

For example, assuming that the real object RO and the real background RB are achromatic, the virtual environment image generation unit 102 may generate a virtual environment image VI including an achromatic virtual object VO and a chromatic virtual background VB. Assuming that the real object RO and the real background RB are in the gray color system, the virtual environment image generation unit 102 generates a virtual environment image VI including the virtual object VO in the gray color system and the virtual background VB in the yellow color different from the gray color system.

Conversely, assuming that the real object RO and the real background RB are chromatic colors, the virtual environment image generation unit 102 may generate a virtual environment image VI including the chromatic virtual object VO and the achromatic virtual background VB. For example, assuming that the real object RO and the real background RB are in the green color system, the virtual environment image generation unit 102 generates a virtual environment image VI including the virtual object VO in the green color system and the virtual background VB in the gray color different from the green color system.

Although the virtual environment image VI is different from that of the first embodiment, the learning method of the GAN100B is the same as that of the first embodiment. According to the second embodiment, by generating the virtual background VB of a color different from that of the real object RO and that of the real background RB, the virtual environment image VI in which the virtual object VO and the virtual background VB can be easily distinguished is acquired. As a result, it is possible to obtain the GAN100B in which the virtual object VO is prevented from approaching the background color and the virtual environment image VI is brought closer to the real environment image RI.

### [3. Third Embodiment]

For example, the first embodiment and the second embodiment may be combined. The virtual environment image generation unit 102 according to the third embodiment generates a virtual environment image VI including a virtual object VO having a color different from the color of the real object RO and the color of the real background RB, and a virtual background VB having a color different from the color of the real object RO and the color of the real background RB. However, the virtual object VO and the virtual background VB are assumed to have different colors from each other. For example, if yellow and pink objects are not arranged in the photographing range of the camera 40 in the real environment RE, the virtual object VO may be yellow and the virtual background VB may be pink. Conversely, the virtual object VO may be pink and the virtual background VB may be yellow.

According to the third embodiment, by generating a virtual environment image VI including a virtual object VO having a color different from the color of the real object RO and the color of the real background RB, and a virtual background VB having a color different from the color of the real object RO and the color of the real background RB, a virtual environment image VI in which the virtual object VO and the virtual background VB can be easily distinguished is acquired. As a result, it is possible to obtain the GAN100B in which the virtual object VO is prevented from approaching the background color and the virtual environment image VI is brought closer to the real environment image RI.

### [4. Fourth Embodiment]

In the first to third embodiments, the case where at least one of the virtual object VO and the virtual background VB has a color far from the real environment RE has been described. In the fourth embodiment, a case will be described in which a virtual environment image VI is generated by executing predetermined image processing on an image (an image similar to the virtual environment image VI in FIG. 4) including a virtual object VO of a color corresponding to the real object RO and a virtual background VB of a color corresponding to the real background RB so that the virtual object VO and the virtual background VB can be easily distinguished from each other.

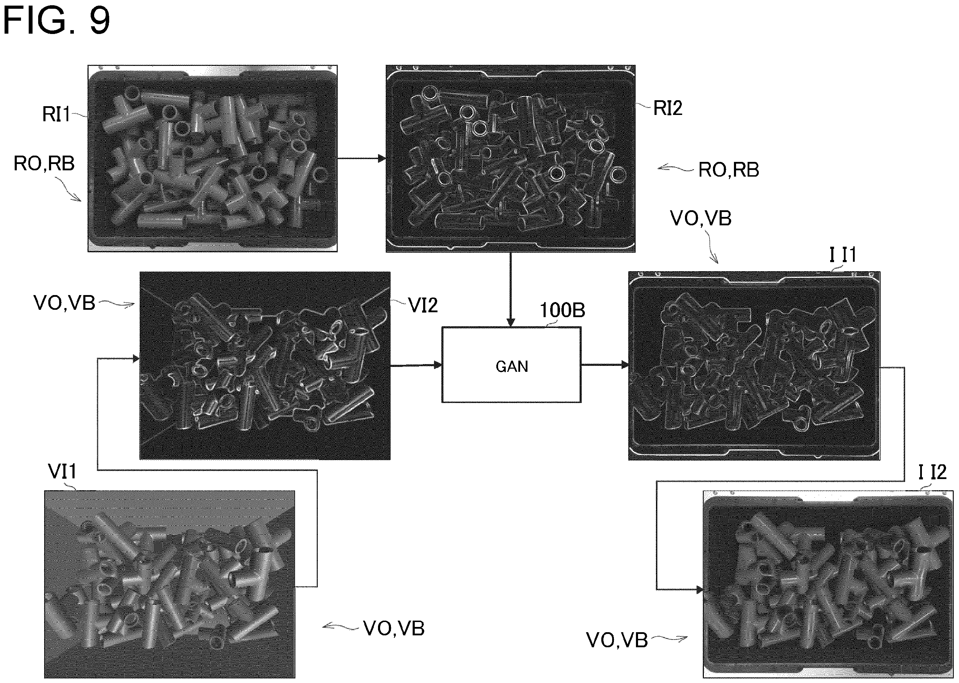

FIG. 9 is a diagram showing an example of the processing executed in the fourth embodiment. As shown in FIG. 9, since the contour of the virtual object VO is emphasized in the virtual environment image VI2 after image processing as compared with the virtual environment image VI1 before image processing, the virtual object VO and the virtual background VB can be easily distinguished. To the GAN100B, the same real environment image RI as in the first to third embodiments may be input, or as shown in FIG. 9, the real environment image RI2 obtained by performing image processing on the real environment image RI1 as in the first to third embodiments may be input. As shown in FIG. 9, the pseudo environment image III output from the GAN100B can be distinguished from each other without assimilation of the virtual object VO and the virtual background VB.

However, since the virtual environment image VI2 input to the GAN100B has been subjected to image processing, the virtual object VO and the virtual background VB of the pseudo environment image III are slightly different in overall hue from the real object RO and the real background RB. Therefore, in the fourth embodiment, inverse transformation of the image processing performed on the virtual environment image VI1 is executed on the pseudo environment image III of FIG. 9 to generate a pseudo environment image 112 closer to the real environment RE.

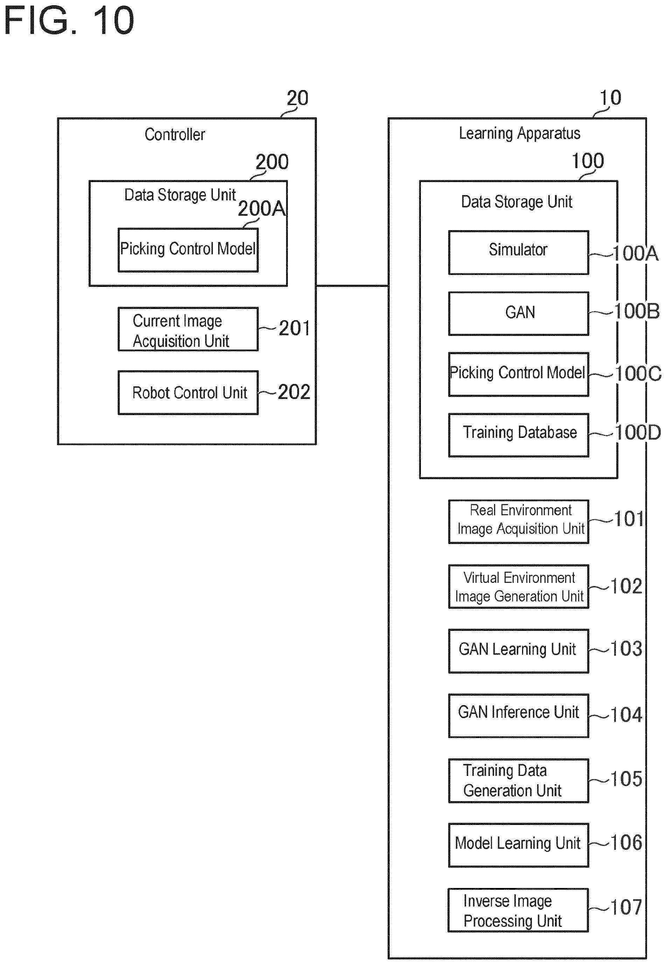

FIG. 10 is an example of a functional block diagram of the fourth embodiment. The virtual environment image generation unit 102 according to the fourth embodiment generates a virtual environment image VI by executing image processing for easily distinguishing the virtual object VO from the virtual background VB. In the fourth embodiment, filter processing will be described as an example of image processing, but it is not limited to filter processing as long as it is image processing that makes it easy to distinguish between the virtual object VO and the virtual background VB. For example, the image processing may be gradation processing to emphasize a color difference between the virtual object VO and the virtual background VB.

For example, the virtual environment image generation unit 102 generates the virtual environment image VI2 by executing a filtering process on the virtual environment image VI1 generated as shown in FIG. 4. In the virtual environment image VI2, the edge of the virtual object VO is emphasized by filtering. The GAN learning unit 103 performs learning of the GAN100B based on the virtual environment image VI2 on which image processing has been executed. Although it is different from the first to third embodiments in that the filtered virtual environment image VI2 is used in the learning of the GAN100B, the learning method itself of the GAN100B is the same as that of the first to third embodiments.

The inverse image processing unit (an example of "inverse image processing circuitry") 107 is implemented mainly by the CPU11. The inverse image processing unit 107 performs inverse conversion of the image processing on the pseudo environment image III generated by the GAN100B. In the fourth embodiment, since the case where the filter processing corresponds to the image processing is described, the inverse conversion is inverse filter processing. The inverse conversion may be any processing corresponding to image processing, and is not limited to an inverse filter. For example, when the image processing is gradation processing, inverse conversion may be performed by using an inverse matrix of the matrix used in gradation processing.

The model learning unit 106 performs learning of the picking control model 100C on the basis of the pseudo environment image II2 subjected to inverse transformation by the inverse image processing unit 107. Although it is different from the first to third embodiments in that the pseudo environment image 112 subjected to inverse transformation is used in the picking control model 100C, the learning method itself of the picking control model 100C is the same as that of the first to third embodiments.

According to the fourth embodiment, the virtual environment image VI can be acquired by executing image processing for making it easy to distinguish between the virtual object VO and the virtual background VB. As a result, it is possible to obtain the GAN100B in which the virtual object VO is prevented from approaching the background color and the virtual environment image VI approaches the real environment image RI. Since it is not necessary to perform image processing when controlling the robot 30 by the time of controlling the robot 30, robot control can be speeded up.

The inverse conversion to the pseudo environment image II may not be executed. In this case, the model learning unit 106 performs learning of the picking control model 100C based on the pseudo environment image III output from the GAN100B. Since the picking control model 100C is learned based on the pseudo environment image III that has not undergone inverse transformation, when the controller 20 controls the robot 30 by using the learned picking control model 100C, the controller 20 performs filter processing on the current image and inputs it to the picking control model 100C. The controller 20 may control the robot 30 based on the picking information output from the picking control model 100C and corresponding to the current image after filtering.

### [5. Fifth Embodiment]

In the fourth embodiment, the case of generating the virtual environment image VI on which the filter processing has been performed has been described, but the filter processing may be performed on the real environment image RI so that the real object RO and the real background RB can be easily distinguished. A learning apparatus 10 executes filter processing on a real environment image RI acquired by a real environment image acquisition unit 101 to generate a real environment image RI in which a real object RO and a real background RB can be easily distinguished. It should be noted that image processing other than the filter processing may be real environment image RI as in the fourth embodiment. This image processing may be a gradation processing or the like that makes it easy to distinguish between the real object RO and the real background RB in the real environment image RI.

In the fifth embodiment, the GAN learning unit 103 performs learning of the GAN100B based on the real environment image RI subjected to the filtering process. Although it is different from the first to fourth embodiments in that the filtered virtual environment image VI is used for learning by the GAN100B, the learning method itself of the GAN100B is the same as that of the first to fourth embodiments. The model learning unit 106 performs learning of the picking control model 100C based on the pseudo environment image II output from the GAN100B.

Since the picking control model 100C is learned based on the real environment image RI on which the filtering process has been executed, when the controller 20 controls the robot 30 by using the learned picking control model 100C, the controller 20 executes the filtering process on the current image and inputs it to the picking control model 100C. The controller 20 controls the robot 30 based on the picking information corresponding to the current image after the filtering process output from the picking control model 100C.

According to the fifth embodiment, learning of the GAN100B is performed on the basis of the real environment image RI on which image processing for making it easy to distinguish the real object RO from the real background RB has been executed. As a result, it is possible to obtain the GAN100B in which the virtual object VO is prevented from approaching the background color and the virtual environment image VI approaches the real environment image RI.

In the fifth embodiment, similarly to the fourth embodiment, the inverse image processing unit 107 may perform inverse conversion to the pseudo environment image II generated by the GAN100B. In this case, the model learning unit 106 performs learning of the picking control model 100C on the basis of the pseudo environment image subjected to the inverse transformation by the inverse image processing unit 107. The controller 20 inputs the current image to the picking control model 100C without performing filter processing on the current image. The controller 20 controls the robot 30 based on the picking information corresponding to the current image after the filtering process output from the picking control model 100C. By executing the inverse transformation, it is not necessary to perform a filtering process at the time of controlling the robot, so that the robot control can be speeded up.

### [6. Modified Example]

It should be noted that the present disclosure is not limited to the embodiments described above. It may be changed as appropriate without departing from the spirit of the present disclosure.

### [First Modified Example]

For example, in the first to fifth embodiments, the case where the virtual object VO is a single color has been described, but the virtual object VO may include a plurality of colors. Similarly, the virtual background VB may include a plurality of colors instead of a single color. A virtual environment image generation unit 102 generates a virtual environment image VI including at least one of a virtual object VO and a virtual background VB having a plurality of colors different from the color of the real object RO and the color of the real background RB. In the first modified example, as in the first embodiment, a virtual object VO of a color different from the real object RO and the real background RB and a virtual background VB of a color corresponding to the real background RB are taken as an example, but the second to fifth embodiments may be combined with the first modified example.

The plurality of colors of the virtual object VO are different from each other. In other words, the plurality of colors is not similar to each other. For example, if the real object RO and the real background RB are gray, the virtual object VO may be yellow and pink, and the virtual background VB may be gray. The virtual object VO is different from the first embodiment in that the virtual object VO has a plurality of colors the same as the first embodiment. When the color of the virtual background VB is set as in the second embodiment, assuming that the real object RO and the real background RB are gray, the virtual object VO may be gray, and the virtual background VB may be yellow and pink.

According to the first modified example, by generating a virtual environment image VI including at least one of a virtual object VO and a virtual background VB having a plurality of colors different from the color of the real object RO and the color of the real background RB, it is possible to generate a virtual environment image VI suitable for learning by the GAN100B.

### [Second Modified Example]

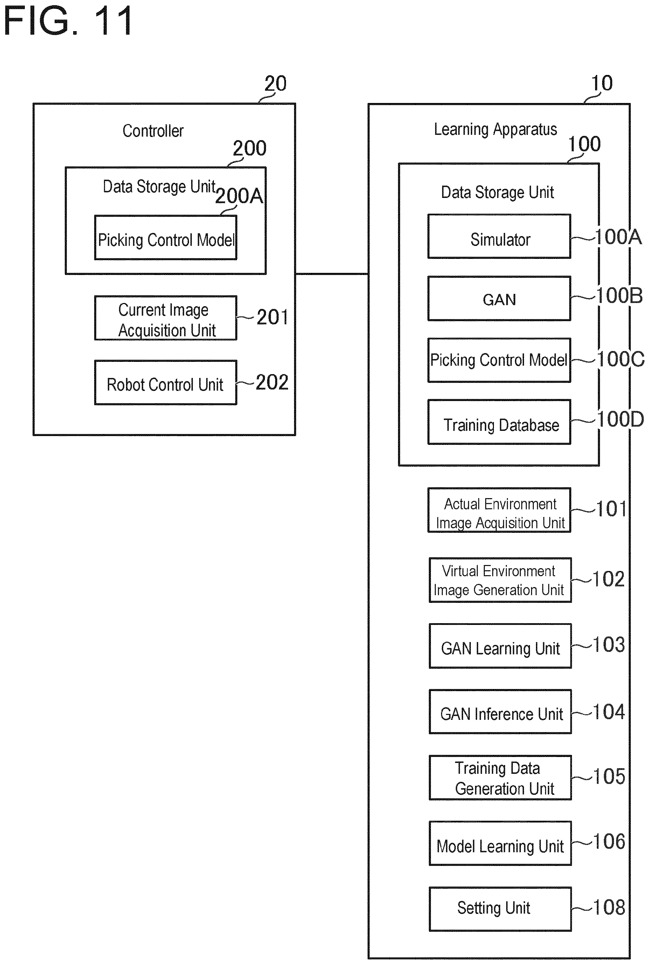

FIG. 11 is a functional block diagram of the second modified example. As shown in FIG. 11, the production system S may include a setting unit (an example of "setting circuitry") 108 that sets the color of at least one of the virtual object VO and the virtual background VB (the "different color" described in the first embodiment) based on the color of the real object RO and the color of the real background RB. The setting unit 108 is implemented mainly by the CPU11. The processing of the setting unit 108 may be a part of the processing of the simulator 100A. In the first modified example, as in the first embodiment, a virtual object VO of a color different from the real object RO and the real background RB and a virtual background VB of a color corresponding to the real background RB are taken as an example, but the second to fifth embodiments may be combined with the first modified example.

For example, it is assumed that the relationship between the colors of the real object RO and the real background RB and the color of the virtual object VO is defined in the data storage unit 100. For example, these relationships are defined such that the colors of the real object RO and the real background RB are opposite to the colors of the virtual object VO. The setting unit 108 sets a color associated with the colors of the real object RO and the real background RB to the virtual object VO. The colors of the real object RO and the real background RB may be designated by the user or may be specified by image analysis of the real environment image RI.

When the setting unit 108 sets the color of the virtual background VB, it is assumed that the relationship between the colors of the real object RO and the real background RB and the color of the virtual background VB is defined in the data storage unit 100. In this case as well, these relationships are defined so that the colors of the real object RO and the real background RB are opposite to the colors of the virtual background VB. The setting unit 108 sets a color associated with the colors of the real object RO and the real background RB to the virtual background VB.

According to the second modified example, by setting the color of at least one of the virtual object VO and the virtual background VB based on the color of the real object RO and the color of the real background RB, the virtual environment image VI suitable for the learning of the GAN100B can be acquired.

### [Third Modified Example]

For example, the plurality of real objects RO may include a first real object RO1 of a first color and a second real object RO2 of a second color. That is, a plurality of real objects RO of mutually different colors may be mixed in a box which is the real background RB. A virtual environment image generation unit 102 according to the third modified example generates a virtual environment image VI including a first virtual object VO1 corresponding to a first real object RO1 and a second virtual object VO2 corresponding to a second real object RO2 of different colors. In the third modified example, as in the first to second modified example, the case of combining with the first embodiment is described as an example, but the second to fifth embodiments may be combined with the third modified example.

The color of the first virtual object VO1 and the color of the second virtual object VO2 are different from each other. Furthermore, the first virtual object VO1 and the second virtual object VO2 have different colors than the first real object RO1, the second real object RO2, the real background RB, and the virtual background VB. For example, it is assumed that the first real object RO1 is a dark gray color, the second real object RO2 is a light gray color, and the real background RB is an intermediate gray color. In this case, the first virtual object VO1 may be yellow, the second virtual object VO2 may be pink, and the virtual background VB may be gray. This makes it easy to distinguish the first virtual object VO1, the second virtual object VO2, and the virtual background VB in the virtual environment image VI, so that the virtual environment image VI is not an assimilated virtual environment image II as shown in FIG. 4.

Although it is different from the first embodiment in that a plurality of real objects RO of different colors are mixed together, the learning method of the GAN100B, the learning method of the picking control model 100C, and the control method itself of the robot 30 are as described in the first embodiment. In the third modified example, the color may be the color of the virtual background VB as in the second embodiment. For example, it is assumed that the first real object RO1 is a dark gray color, the second real object RO2 is a light gray color, and the real background RB is an intermediate gray color. In this case, the first virtual object VO1 may be yellow, the second virtual object VO2 may be light gray, and the virtual background VB may be pink. This also makes it easy to distinguish the first virtual object VO1, the second virtual object VO2, and the virtual background VB in the virtual environment image VI, so that the virtual environment image VI is not an assimilated virtual environment image II as shown in FIG. 4.

According to the third modified example, even if real objects RO having different colors are included in the real environment RE, it is possible to obtain the GAN100B that brings the virtual environment image VI closer to the real environment image RI.

### [Other Modified Examples]

For example, although the production system S has been described as an example, a learning system including a real environment image acquisition unit 101, a virtual environment image generation unit 102, a virtual environment image generation unit 102, and a GAN learning unit 103 is also included in the scope of this disclosure. For example, the learning system may be composed of only the learning apparatus 10. For example, the real environment image acquisition unit 101, the virtual environment image generation unit 102, and the GAN learning unit 103 may be implemented by the first apparatus, and the GAN inference unit 104 and the model learning unit 106 may be implemented by the second apparatus. In this case, the first device corresponds to the learning system. The second device is an external device not included in the learning system. Also in such a learning system, learning of the GAN100B for bringing the virtual environment image VI close to the real environment image RI can be realized.

For example, an image generation system including the learning system and the GAN inference unit 104 is also included in the scope of this disclosure. For example, the image generation system may be configured by only the learning apparatus 10. For example, the real environment image acquisition unit 101, the virtual environment image generation unit 102, the GAN learning unit 103, and the GAN inference unit 104 may be implemented by the first apparatus, and the model learning unit 106 may be implemented by the second apparatus. In this case, the first apparatus corresponds to the image generation system. The second apparatus is an external apparatus not included in the image generation system. Also in such an image generation system, learning of the GAN100B for bringing the virtual environment image VI close to the real environment image RI can be realized and a pseudo environment image II useful for robot control can be generated.

For example, the robot 30 may perform operations other than bulk picking. For example, the production system S, the learning system, and the image generation system can be applied to the robot 30 that performs other operations such as processing, packaging, transportation, or inspection. In addition, for example, a scene where the controller 20 controls the robot 30 is described as an example, but the production system S, the learning system, and the image processing system can be applied to various scenes other than robot control. The production system S, the learning system, and the image processing system can be applied to a scene where some work occurs on the real object RO, and can also be applied to a scene including, for example, a PLC, a motor controller, a numerical controller, a cell management device, or a line management device.

For example, each function may be realized by an optional device in the production system S. Some or all of the functions described as those realized by the learning apparatus 10 may be shared by a plurality of apparatuses. Some or all of the functions described as being implemented in controller 20 may be implemented by learning apparatus 10 or other devices.

In addition to what has already been described above, techniques according to the above-described embodiments and various modifications may be used in combination as appropriate. In addition, although not illustrated individually, various modifications may be made to the above-described embodiments and modifications without departing from the spirit thereof.

The problems and effects to be solved by the above-described embodiments and modifications are not limited to the above-described contents. According to embodiments, modifications, and the like, problems not described above can be solved or effects not described above can be produced, and only a part of the problems described may be solved or only a part of the effects described may be produced.

As used herein, the term "comprise" and its variations are intended to mean openended terms, not excluding any other elements and/or components that are not recited herein. The same applies to the terms "include" , "have" , and their variations.

As used herein, a component suffixed with a term such as "member" , "portion" , "part" , "element" , "body" , and "structure" is intended to mean that there is a single such component or a plurality of such components.

As used herein, ordinal terms such as "first" and "second" are merely used for distinguishing purposes and there is no other intention (such as to connote a particular order) in using ordinal terms. For example, the mere use of "first element" does not connote the existence of "second element" ; otherwise, the mere use of "second element" does not connote the existence of "first element"

As used herein, approximating language such as "approximately" , "about" , and "substantially" may be applied to modify any quantitative representation that could permissibly vary without a significant change in the final result obtained. All of the quantitative representations recited in the present application shall be construed to be modified by approximating language such as "approximately" , "about" , and " substantially"

As used herein, the phrase "at least one of A and B" is intended to be interpreted as "only A" , "only B" , or "both A and B"

Obviously, numerous modifications and variations of the present disclosure are possible in light of the above teachings. It is therefore to be understood that within the scope of the appended claims, the present disclosure may be practiced otherwise than as specifically described herein.

## Claims

1. A learning system comprising:
a real environment image acquisition unit configured to acquire a real environment image indicating a real environment in which real objects and a real background are provided;
a virtual environment image generation unit configured to generate a virtual environment image indicating a virtual environment in which virtual objects and a virtual background are provided, the virtual environment image including at least one of the virtual background and the virtual objects which have a different color or different colors different from colors of the real background and the real objects; and
a GAN learning unit configured to perform GAN (Generative Adversarial Networks) learning via which the virtual environment image is got more similar to the real environment image based on the real environment image and the virtual environment image.

2. The learning system according to claim 1, wherein the virtual environment image generation unit is configured to generate the virtual environment image including the virtual objects and the virtual background, a color or colors of the plurality of virtual objects are different from a color of the virtual background.

3. The learning system according to claim 1 or 2, wherein the virtual environment image generation unit is configured to generate the virtual environment image including at least one of the virtual background and the virtual objects which have colors different from the colors of the real background and the real objects.

4. The learning system according to any one of claims 1 to 3, further comprising:
a setting unit configured to set the different color or the different colors based on the colors of the real background and the real objects.

5. The learning system according to any one of claims 1 to 4,
wherein the virtual environment image generation unit is configured to generate the virtual environment image including the virtual objects whose color of colors are different from the colors of the real background and the real objects.

6. The learning system according to claim 5,
wherein the real objects include a first real object with a first color and a second real object with a second color, and
wherein the virtual environment image generation unit is configured to generate the virtual environment image including a first virtual object corresponding to the first real object and a second virtual obj ect corresponding to the second real object, a color of the first virtual object and a color of the second virtual object being different.

7. The learning system according to any one of claims 1 to 6,
wherein the virtual environment image generation unit is configured to generate the virtual background having a color different from the colors of the real background and the real objects.

8. The learning system according to claim 7, further comprising:
a simulator configured to generate the virtual environment in which positions of the virtual objects differ from positions of the real objects in a three-dimensional space which includes the virtual objects having a color corresponding to a color of the real objects and which includes the virtual background having a color corresponding to a color of the real background,
wherein, when the virtual environment image generation unit generates virtual environment image from the virtual environment generated by the simulator, the virtual environment image generation unit is configured to generate the virtual environment image including at least one of the virtual background and the virtual objects which have the different color.

9. An image generation system comprising:
a learning system according to any one of claims 1 to 8; and
a GAN inference unit configured to generate a pseudo environment image in which a virtual environment image which is different from the virtual environment image used for the learning is got more similar to the real environment image via the GAN learned by the GAN learning unit.

10. A production system comprising:
an image generation system according to claim 9;
a model learning unit configured to learn a picking control model to control picking by a robot based on training data including the pseudo environment image generated by the image generation system and picking information of the robot;
a current image acquisition unit configured to acquire a current image of the real environment when the picking by the robot is controlled; and
a robot control unit configured to control the robot based on the current image and the picking control model.

11. The production system according to claim 10, further comprising:
an inverse image processing unit configured to perform inverse conversion of the image processing on the pseudo environment image generated by the image generation system,
wherein the virtual environment image generation unit is configured to execute image processing to make easier to distinguish the virtual objects from the virtual background,
wherein the GAN learning unit is configured to perform learning of the GAN based on the virtual environment image on which the image processing has been executed, and
wherein the model learning unit is configured to perform learning of the picking control model based on the pseudo environment image subjected to inverse transformation by the inverse image processing unit.

12. A learning method comprising:
acquiring a real environment image indicating a real environment in which real objects and a real background are provided;
generating a virtual environment image indicating a virtual environment in which virtual objects and a virtual background are provided, the virtual environment image including at least one of the virtual background and the virtual objects which have a different color or different colors different from colors of the real background and the real objects; and
performing GAN (Generative Adversarial Networks) learning via which the virtual environment image is got more similar to the real environment image based on the real environment image and the virtual environment image.

13. An image generation method comprising:
generating a pseudo environment image in which a virtual environment image which is different from the virtual environment image used for the learning is got more similar to the real environment image via the .GAN (Generative Adversarial Networks) learned in accordance with the learning method according to claim 12.
